# NEW EUROPEAN PATENT SPECIFICATION

(11) **EP 3 412 742 B2**
(45) Date of publication and mention of the opposition decision: **27.09.2023**
(45) Mention of the grant of the patent: 29.07.2020
(21) Application number: 16888944.2
(22) Date of filing: 12.05.2016
(51) Int. Cl.: C09J 7/38, C09J 133/08

(54) **METHOD FOR MANUFACTURING HIGH-TEMPERATURE-RESISTANT POLYVINYL-CHLORIDE ADHESIVE TAPE**
VERFAHREN ZUR HERSTELLUNG EINES HOCHTEMPERATURBESTÄNDIGEN POLYVINYLCHLORIDKLEBEBANDS
PROCÉDÉ DE FABRICATION D'UN RUBAN ADHÉSIF À BASE DE POLYCHLORURE DE VINYLE, RÉSISTANT AUX TEMPÉRATURES ÉLEVÉES

(30) Priority: 03.02.2016 CN 201610073413
(43) Date of publication of application: 12.12.2018
(73) Proprietor: Hebei Yongle Tape Co., Ltd., Baoding, Hebei 072750 (CN)
(72) Inventor: WANG, Feng, Baoding, Hebei 072750 (CN); QI, Shuqin, Baoding, Hebei 072750 (CN); JIN, Chunming, Baoding, Hebei 072750 (CN); LI, Shuang, Baoding, Hebei 072750 (CN); YANG, Yukun, Baoding, Hebei 072750 (CN)
(74) Representative: Müller-Boré & Partner Patentanwälte PartG mbB
(86) International application number: PCT/CN2016/081923
(87) International publication number: WO 2017/133122

(56) References cited:
- WO-A1-2010/070026
- WO-A1-2015/043997
- WO-A1-2015/131938
- WO-A1-2015/131938
- CN-A- 101 787 248
- CN-A- 101 787 248
- CN-A- 104 797 673
- CN-A- 104 927 697
- DE-A1- 10 105 278
- DE-A1- 10 151 818
- US-A1- 2007 218 276
- US-A1- 2012 315 474

## Description

### Technical Field

The present invention relates to the field of chemical technologies and chemical industry, particularly to a method for manufacturing a high temperature-resistant polyvinyl chloride adhesive tape, and more particularly to a method and a production process for manufacturing an adhesive tape by applying a UV-crosslinkable hot-melt pressure-sensitive adhesive to a high temperature-resistant polyvinyl chloride film. The high temperature-resistant polyvinyl chloride film is a high temperature-resistant material containing a liquid polymeric plasticizer, a solid polymeric plasticizer, and a heat stabilizer. The hot-melt pressure-sensitive adhesive can be directly coated onto the high temperature-resistant polyvinyl chloride film at 130-150°C; and then crosslinked by UV irradiation, to make a polyvinyl chloride adhesive tape.

### Background Art

The electrical pressure-sensitive adhesive tape having a soft polyvinyl chloride (SPVC) film as a substrate is widely used in automobiles, machinery manufacturing, instruments and household appliances because of its excellent mechanical properties, flame retardancy, electrical insulation properties, heat deformation resistance and superior processability. However, the polyvinyl chloride film substrate contains low-molecular weight plasticizers such as dioctyl phthalate (DOP), dibutyl phthalate (DBP) and tri-n-butyl phosphate (TBP), etc. and has poor temperature resistance. Moreover, these low-molecular weight plasticizers may migrate into the adhesive layer and decrease the adhesion powder of the adhesive tape, thus failing to meet the requirements in industrial application. The conventional polymeric polyvinyl chloride improves the high-temperature resistance, but cannot be coated at temperatures above 120°C.

At present, the soft polyvinyl chloride adhesive tape products in the industry are produced by directly coating a solvent-type rubber-based pressure-sensitive adhesive on a soft polyvinyl chloride film. The solvent-type rubber-based pressure-sensitive adhesive contains a large amount of organic solvent, generally toluene. During the coating process, the organic solvent may be partially volatilized into the atmosphere to cause environmental pollution. The obtained polyvinyl chloride adhesive tape also contains solvent residues, which will be slowly released during use and cause the pollution of the environment of use, such as the indoor environment of an automobile, thus failing to meet the requirements of Restriction of Hazardous Substances Directive (RoHS Directive) in electrical and electronic equipment issued by European Commission. Moreover, the coating process of the solvent-type rubber-based pressure-sensitive adhesive has the disadvantages of high energy consumption, large floor area occupied by the coating equipment, and thus high production cost.

The UV-crosslinked hot-melt pressure-sensitive adhesive is environmentally friendly, and requires small equipment, low energy consumption, and thus low production cost. More importantly, such a pressure-sensitive adhesive has better plasticizer resistance, and the migration of polymeric plasticizers does not significantly decrease the performance of the adhesive tape. Therefore, this type of hot-melt pressure-sensitive adhesives can meet a wide range of needs in the industry. However, the polyvinyl chloride film plasticized with a low-molecular weight plasticizer and a conventional polymeric plasticizer has insufficient temperature resistance. In order to prevent thermal damage of the polyvinyl chloride film during coating, the temperature at the time of coating has to be lowered, and an ultraviolet lamp having a lower energy is used. When the coating temperature is lowered, the viscosity of the adhesive is increased, and the flowability is deteriorated, which leads to an uneven coating. This limits the speed of coating and reduces the production efficiency. The applicant described the use of an emulsion-type pressure-sensitive adhesive on a polyvinyl chloride film in Chinese Invention Patent No. CN 101372607 B, but the adhesive still needs to be further improved in terms of the high-temperature resistance. Other adhesive tapes are disclosed in CN-A-101787248, US-A-2012/315474 and WO-A-131938.

### Summary of the Invention

In order to solve the above problems existing in the prior art, the present invention provides a method for manufacturing a novel high temperature-resistant polyvinyl chloride adhesive tape according to claim 1. The UV-crosslinked hot-melt adhesive has better high-temperature resistance. The method comprises: directly coating a UV-crosslinkable hot-melt pressure-sensitive adhesive onto a high temperature-resistant polyvinyl chloride film substrate at a temperature of 130-150°C, and then crosslinking by UV irradiation to make a novel high temperature-resistant polyvinyl chloride adhesive tape.

According to the present invention, a method for manufacturing a high temperature-resistant polyvinyl chloride adhesive tape is provided, which comprises:
coating, as a hot melt, a UV-crosslinkable hot-melt pressure-sensitive adhesive onto a high temperature-resistant polyvinyl chloride film at a temperature of 130-150°C, and then crosslinking by UV irradiation with a set of UV lamps, wherein the high temperature-resistant polyvinyl chloride film comprises a liquid polymeric plasticizer, a solid polymeric plasticizer, and a heat stabilizer, wherein the high temperature-resistant polyvinyl chloride film is protected by cooling during the coating process.

Further, the high temperature-resistant polyvinyl chloride film is protected by cooling during the coating process to prevent the high temperature-resistant polyvinyl chloride film from being damaged during coating and upon UV irradiation.

Optionally, the UV-crosslinkable hot-melt pressure-sensitive adhesive comprises a copolymer of one or more polymerizable photoinitiators and an acrylate monomer, or a mixture of an oligomer containing one or more polymerizable photoinitiators and an acrylate polymer, wherein the acrylate refers to all kinds of acrylate esters, for example, n-butyl acrylate (BA), methyl methacrylate (MMA) and the like.

Further, the UV-crosslinkable hot-melt pressure-sensitive adhesive also contains a heat stabilizer, a photostabilizer, a tackifying resin, and a plasticizer.

Optionally, the liquid polymeric plasticizer is at least one selected from the group consisting of liquid polyethylene glycol adipate and liquid polypropylene glycol adipate.

Optionally, the solid polymeric plasticizer is at least one selected from the group consisting of an ethylene-vinyl acetate copolymer, an ethylene-methyl acrylate copolymer, an ethylene-ethyl acrylate copolymer, an ethylene-butyl acrylate copolymer, a nitrile butadiene rubber powder, and chlorinated polyethylene.

Optionally, the heat stabilizer is at least one selected from the group consisting of a non-lead liquid or a solid barium/zinc stabilizer, a cadmium/barium/zinc stabilizer, a calcium/zinc stabilizer, and an organotin stabilizer.

Optionally, the polymerizable photoinitiator is an acetophenone or benzophenone derivative containing a methacryloyloxy group or an acryloyloxy group.

Optionally, the amount coated of the UV-crosslinkable hot-melt pressure-sensitive adhesive in hot melt coating is 10-35 g / m².

Optionally, the UV lamp is a high-pressure mercury lamp, a medium-to-low pressure mercury lamp or an LED lamp, having a UV irradiation energy of at least 10 mJ/cm².

Further, the coating is carried out by means of slot-die coating, bar coating or extrusion laminating.

In the method for manufacturing a novel high temperature-resistant polyvinyl chloride adhesive tape provided in the present invention, a high temperature-resistant polyvinyl chloride film is used as a substrate. In addition to the main polyvinyl chloride resin, the high temperature-resistant polyvinyl chloride film also contains a liquid polymeric plasticizer, a solid polymeric plasticizer and a heat stabilizer. The liquid polymeric plasticizer used in the present invention is a liquid polyethylene glycol adipate plasticizer and a liquid polypropylene glycol adipate plasticizer. The solid polymeric plasticizer used is an ethylene-vinyl acetate (EVA) copolymer, an ethylene-methyl acrylate (EMA) copolymer, an ethylene-ethyl acrylate (EEA) copolymer, an ethylene-butyl acrylate (EBA) copolymer, a nitrile butadiene rubber (NBR) powder, and chlorinated polyethylene (CPE), etc. The heat stabilizer used is a non-lead liquid or a solid barium/zinc stabilizer, a cadmium/barium/zinc stabilizer, a calcium/zinc stabilizer, or an organotin stabilizer. In addition, some colorants and fillers are further used as needed.

The use of the high temperature-resistant polyvinyl chloride film substrate can increase the hot melt coating temperature for the adhesive tape to 150°C, thereby speeding up the coating and increasing the production efficiency. In addition, a polymeric plasticizer is added to the polyvinyl chloride film to reduce the migration of the plasticizer in the film to the adhesive layer. That is to say, during the storage and use of the adhesive tape, or after baking at a high temperature of 60-80°C, although the migration of a small amount of plasticizer from the substrate to the adhesive layer may occur, the performance of the adhesive tape can still be retained to meet the requirements for application in the industry. Therefore, the polyvinyl chloride adhesive tape produced using the production method of the present invention is environmentally friendly, and has high-temperature resistance, low VOC, and other excellent performances.

It is well known that the UV cross-linked hot-melt pressure-sensitive adhesive does not contain a solvent, so a solvent recovery system is not required in the coating process, thus having the advantages of environmental protection and energy saving. The hot-melt pressure-sensitive adhesive is commonly coated by slot-die coating, bar coating or extrusion laminating. Compared with a coating equipment for the conventional aqueous and solvent-type pressure-sensitive adhesives, the coating equipment for the hot-melt pressure-sensitive adhesive occupies a small floor area and requires less labor for operation, and thereby the production efficiency can be greatly improved. The melt viscosity of the hot-melt pressure-sensitive adhesive is a very important parameter, and the magnitude of the melt viscosity has a direct influence on the coating speed. At present, the rubber-based hot-melt pressure-sensitive adhesive used in the industry generally has a relatively large melt viscosity. When a soft polyvinyl chloride (SPVC) film is coated to manufacture a SPVC adhesive tape, a complicated transfer coating method has to be used (i.e., a method in which a release paper is coated and dried, and then the adhesive layer is transferred to a SPVC film), and a simple direct coating method cannot be used. Since during a direct coating process, in order to increase the coating speed, it is necessary to raise the temperature of the rubber-based hot-melt pressure-sensitive adhesive to 150°C or more to lower the viscosity, so that coating can be carried out normally (the most common method). However, the increase in the temperature of the adhesive during coating will have many negative effects, such as the destruction to substrates that cannot stand high temperature (especially SPVC substrates) to cause thermal deformation or even thermal degradation and also increased instability of the adhesive. The UV-crosslinkable hot-melt pressure-sensitive adhesive used in the present invention has a lower melt viscosity than that of the rubber-based hot-melt pressure-sensitive adhesive and can be directly coated on a SPVC substrate at a low temperature (130-150°C), without destroying the soft polyvinyl chloride film substrate. In the present invention, the SPVC substrate is also cooled during the coating process to achieve the purpose of further protection.

The main component in known UV-crosslinkable hot-melt pressure-sensitive adhesive is a mixture of acrylate monomers and their copolymers. Among the acrylate monomers, in addition to the commonly used n-butyl acrylate, isooctyl acrylate, acrylic acid, methacrylic acid, hydroxyethyl acrylate, and hydroxypropyl acrylate, special monomers such as methacrylamide, N-hydroxy methacrylamide, N-butoxyacrylamide, and β-CEA, may also be used. Other special soft monomers, such as n-octyl acrylate, dibutyl maleate, dioctyl maleate and norbornyl acrylate or mixtures thereof, may also be used sometimes. In order to increase the adhesion power, a tackifying resin such as a rosin resin, a terpene resin, a petroleum resin or its corresponding hydrogenated or esterified modified resin or the like may be used. In order to prevent the aging of the adhesive, an appropriate amount of an antioxidant is usually added. The UV-crosslinkable hot-melt pressure-sensitive adhesive needs to further contain one or more photoinitiators. The most commonly used photoinitiators include derivatives of acetophenone and benzophenone. The photoinitiator generates a radical group under the irradiation of ultraviolet light, more specifically under the irradiation of UVC, to further polymerize the acrylate monomers in the adhesive and crosslink the acrylate polymers for curing.

In the composition of the UV-crosslinkable hot-melt pressure-sensitive adhesive used in the present invention, in addition to the above components, a copolymer of one or more polymerizable photoinitiators and an acrylate monomer, or a mixture of an oligomer containing one or more polymerizable photoinitiators and an acrylate polymer may be further contained. The polymerizable photoinitiator is an acetophenone or benzophenone derivative containing a methacryloyloxy group or an acryloyloxy group, for example, 2-hydroxy-4-(methacryloyloxy) benzophenone. Therefore, the oligomer containing a polymerizable photoinitiator can lower the viscosity of the hot-melt adhesive, thereby reducing the coating temperature to provide a better protection for the polyvinyl chloride substrate. The use of a high molecular-weight photoinitiator in the composition of the UV-crosslinkable hot-melt pressure-sensitive adhesive can further reduce the volatility of the adhesive layer, such that the adhesive tape can well meet the requirement of environmental protection.

The method for preparing a novel high temperature-resistant polyvinyl chloride adhesive tape provided in the present invention is implemented by a hot melt coater in a slot-die coating, a bar coating or an extrusion laminating process. The high temperature-resistant polyvinyl chloride film substrate is mounted on an unwinding roller and led to a winding roller. The temperature of the adhesive melting oven is set to 130-140°C, the temperature of the coating head is set to 130-150°C, and the ratio of the rotational speed of the adhesive pump to the speed of the main machine is adjusted according to the weight of the adhesive to be applied. The winding tension and unwinding tension are set and a cooling unit is started. The speed of the main machine is adjusted, and the coating head is moved slowly close to the surface of the polyvinyl chloride film. The adhesive pump is opened and the coating is initiated. The gap distance between the coating head and the substrate is adjusted, and the speed of the coater is adjusted for coating. In the present invention, the hot-melt adhesive is coated in an amount of 10-35 g/ m². The adhesive layer is cross-linked and cured by UV irradiation with a set of UV lamps. The UV lamp used in the present invention is a high-pressure mercury lamp, a medium-to- low pressure mercury lamp or an LED lamp, having a minimum UV irradiation energy reaching 10mJ/cm². The crosslinked and cured adhesive tape is wound and cut to obtain the high temperature-resistant polyvinyl chloride adhesive tape product. In order to prevent the polyvinyl chloride film substrate from being damaged during UV irradiation during the coating process, the polyvinyl chloride film is protected by cooling. The cooling method adopted in the present invention may be water cooling or air cooling, or both water cooling and air cooling may be used at the same time.

Performance test: The prepared UV-crosslinkable hot-melt pressure-sensitive adhesive is coated as a hot melt to a polyvinyl chloride film substrate having a thickness of 0.15 mm by the above method, and a small roll of an electrical pressure-sensitive adhesive tape with an adhesive layer having a thickness of 20 µm is obtained. After aging at 60°C for 8 hrs, the adhesion properties are tested according to the following criteria: 1) The peel strength at 180° is tested according to the National Standard of the People's Republic of China GB/T 2792-1998; 2) The initial adhesion performance of the adhesive tape is tested according to the National Standard of the People's Republic of China GB/4852-1984; 3) The high-temperature resistance level is evaluated according to VW60360 (LV312); and 4) The maintenance of the adhesion power of the adhesive tape is tested according to the National Standard of the People's Republic of China GB/T4581-1988.

### Detailed Description

Reference and comparative examples are described in detail below. The reference examples (not in accordance with the claimed invention) are provided for making the present invention clearer to those skilled in the art and making the present invention implementable based on the description herein.

In the reference examples (not in accordance with the claimed invention) and comparative examples provided hereinbelow, the following polyvinyl chloride films are used respectively:
1. High temperature-resistant polyvinyl chloride film having a composition comprising, in percent by weight:

| | |
|---|---|
| SG-3 polyvinyl chloride resin | 57.5% |
| Ethylene glycol adipate plasticizer | 25% |
| Ethylene-methacrylate-carbonyl polymer | 4% |
| Nitrile butadiene rubber powder | 1.5% |
| Liquid barium/zinc stabilizer | 2% |
| Calcium carbonate | 10% |

The raw materials are mixed, and then mixed by a high-speed mixer, milled in an open mill at a high temperature, extruded by an extruder, and rolled at high temperature by a three-roll or a four-roll calender to prepare a polyvinyl chloride film.
2. Polyvinyl chloride films containing a DOP plasticizer are generally available from the market.

### Reference Example 1

An acrylate copolymer of n-butyl acrylate, isooctyl acrylate, methyl acrylate, and acrylic acid with a copolymerizable photoinitiator was applied to the above-mentioned high temperature-resistant polyvinyl chloride film through a process as described above to prepare a polyvinyl chloride adhesive tape. The coating temperature was 140°C.

### Reference Example 2

An acrylate copolymer of n-butyl acrylate and acrylic acid with a copolymerizable photoinitiator was applied to the above-mentioned high temperature-resistant polyvinyl chloride film through a process as described above, to prepare a polyvinyl chloride adhesive tape. The coating temperature was 140°C.

### Reference Example 3

A mixture comprising 20% of an oligomer of n-butyl acrylate and acrylic acid with a copolymerizable photoinitiator and 80% of an acrylate polymer was applied to the above-mentioned high temperature-resistant polyvinyl chloride film through a process as described above, to prepare a polyvinyl chloride adhesive tape. The coating temperature was 130°C.

### Comparative Example 1

If an acrylate copolymer of n-butyl acrylate, isooctyl acrylate, methyl acrylate, and acrylic acid with a copolymerizable photoinitiator was directly applied to a polyvinyl chloride film containing a DOP plasticizer, the film wound be destroyed. Therefore, in this comparative example, transfer coating was employed, that is, the acrylate copolymer was coated onto a release paper first, and then transferred to a polyvinyl chloride film containing a DOP plasticizer. The coating temperature was 140°C.

### Comparative Example 2

The polyvinyl chloride adhesive tape for use in wiring harness for automobile currently used in the industry is Huaxia adhesive tape FC110 (high temperature-resistant PVC adhesive tape for use in wiring harness for automobile, manufactured by Hebei Huaxia Enterprise Co., Ltd.). The adhesive used is a solvent-type rubber-based system, and the polyvinyl chloride film used is a high temperature-resistant polyvinyl chloride film.

### Comparative Example 3

The polyvinyl chloride adhesive tape for use in wiring harness for automobile currently used in the industry is Huaxia adhesive tape UD110 (PVC adhesive tape for use in wiring harness for automobile, manufactured by Hebei Huaxia Enterprise Co., Ltd.). The adhesive used is a solvent-type rubber-based system, and the polyvinyl chloride film used is a polyvinyl chloride film a containing a DOP plasticizer.

**Table 1. Performance data of adhesive tapes manufactured**

| | Reference Example 1 | Reference Example 2 | Reference Example 3 | Comparative Example 1 | Comparative Example 2 | Comparative Example 3 |
|---|---|---|---|---|---|---|
| Peel strength at 180° from steel plate, N/cm | 1.3 | 1.7 | 1.5 | Serious "adhesive loss" occurs upon unrolling of the adhesive tape, and various performances are failed to be tested | 1.5 | 1.2 |
| Initial adhesion power, number of ball | 17 | 19 | 18 | | 16 | 16 |
| Maintenance of adhesion power, min | 240 | 300 | 270 | | 200 | 180 |
| Temperature resistance level, °C | 125 | 125 | 125 | ---- | 105 | 80 |
| Aging test at 60°C for 8 hrs | No adhesive loss occurs upon unrolling | No adhesive loss occurs upon unrolling | No adhesive loss occurs upon unrolling | ---- | No adhesive loss occurs upon unrolling | No adhesive loss occurs upon unrolling |

From the performance data of Reference Examples 1-3 in Table 1, it can be seen that the UV-crosslinkable hot-melt pressure-sensitive adhesive can significantly improve the high-temperature resistance of the polyvinyl chloride adhesive tape, reaching a temperature resistance level of 125°C. The adhesive tape prepared with a solvent-type rubber has a high-temperature resistance level of 105°C (Comparative Example 2). As can be known from the test results of Comparative Examples 1 and 3, UV-crosslinkable hot-melt pressure-sensitive adhesive has a resistance to low-molecular weight plasticizers that is not as good as that of the solvent-type rubber. In general, the UV-crosslinkable hot-melt pressure-sensitive adhesive is suitable for application to a high temperature-resistant polyvinyl chloride film containing a polymeric plasticizer, and the manufactured adhesive tape meets the industrial application specifications. In addition, the adhesive tape has excellent high-temperature resistance, is suitable for the wrapping and bundling of cable bundles, and especially suitable for the wrapping and bundling of cable bundles in automobile bodies.

## Claims

1. A method for manufacturing a high temperature-resistant polyvinyl chloride adhesive tape, comprising:
coating, as a hot melt, a UV-crosslinkable hot-melt pressure-sensitive adhesive onto a high temperature-resistant polyvinyl chloride film at a temperature of 130-150°C, and
then crosslinking by UV irradiation with a set of UV lamps,
wherein the high temperature-resistant polyvinyl chloride film comprises a liquid polymeric plasticizer, a solid polymeric plasticizer, and a heat stabilizer, and
wherein the high temperature-resistant polyvinyl chloride film is protected by cooling during the coating process.

2. The method for manufacturing a high temperature-resistant polyvinyl chloride adhesive tape according to claim 1, wherein the UV-crosslinkable hot-melt pressure-sensitive adhesive comprises a copolymer of one or more polymerizable photoinitiators and an acrylate monomer, or a mixture of an oligomer containing one or more polymerizable photoinitiators and an acrylate polymer.

3. The method for manufacturing a high temperature-resistant polyvinyl chloride adhesive tape according to claim 2, wherein the UV-crosslinkable hot-melt pressure-sensitive adhesive further comprises a heat stabilizer, a photostabilizer, a tackifying resin, and a plasticizer.

4. The method for manufacturing a high temperature-resistant polyvinyl chloride adhesive tape according to claim 1, wherein the liquid polymeric plasticizer is at least one selected from the group consisting of liquid polyethylene glycol adipate and liquid polypropylene glycol adipate.

5. The method for manufacturing a high temperature-resistant polyvinyl chloride adhesive tape according to claim 1, wherein the solid polymeric plasticizer is at least one selected from the group consisting of an ethylene-vinyl acetate copolymer, an ethylene-methyl acrylate copolymer, an ethylene-ethyl acrylate copolymer, an ethylene-butyl acrylate copolymer, a nitrile butadiene rubber powder, and chlorinated polyethylene.

6. The method for manufacturing a high temperature-resistant polyvinyl chloride adhesive tape according to claim 1, wherein the heat stabilizer is at least one selected from the group consisting of a non-lead liquid or a solid barium/zinc stabilizer, a cadmium/barium/zinc stabilizer, a calcium/zinc stabilizer, and an organotin stabilizer.

7. The method for manufacturing a high temperature-resistant polyvinyl chloride adhesive tape according to claim 2, wherein the polymerizable photoinitiator is an acetophenone or benzophenone derivative containing a methacryloyloxy group or an acryloyloxy group.

8. The method for manufacturing a high temperature-resistant polyvinyl chloride adhesive tape according to claim 1, wherein the amount coated of the UV-crosslinkable hot-melt pressure-sensitive adhesive in hot melt coating is 10-35 g/m².

9. The method for manufacturing a high temperature-resistant polyvinyl chloride adhesive tape according to claim 1, wherein the UV lamp is a high-pressure mercury lamp, a medium-to-low pressure mercury lamp or an LED lamp, having a UV irradiation energy of at least 10 mJ/cm².

10. The method for manufacturing a high temperature-resistant polyvinyl chloride adhesive tape according to claim 1, wherein the coating is carried out by means of slot-die coating, bar coating or extrusion laminating.

## Patentansprüche

1. Verfahren zur Herstellung eines hochtemperaturbeständigen Polyvinylchlorid-Klebebands, umfassend:
Beschichten, als eine Heißschmelze, eines UV-vernetzbaren Heißschmelzhaftklebers auf einen hochtemperaturbeständigen Polyvinylchloridfilm bei einer Temperatur von 130-150°C und anschließend Vernetzen durch UV-Bestrahlung mit einem Satz von UV-Lampen, wobei der hochtemperaturbeständige Polyvinylchloridfilm einen flüssigen polymeren Weichmacher, einen festen polymeren Weichmacher und einen Wärmestabilisator umfasst, und wobei der hochtemperaturbeständige Polyvinylchloridfilm während des Beschichtungsverfahrens durch Abkühlen geschützt wird.

2. Verfahren zur Herstellung eines hochtemperaturbeständigen Polyvinylchlorid-Klebebands gemäß Anspruch 1, wobei der UV-vernetzbare Heißschmelzhaftkleber ein Copolymer von einem oder mehreren polymerisierbaren Photoinitiatoren und einem Acrylatmonomer oder von einem Gemisch von einem Oligomer, enthaltend ein oder mehrere polymerisierbare Photoinitiatoren, und einem Acrylatpolymer umfasst.

3. Verfahren zur Herstellung eines hochtemperaturbeständigen Polyvinylchlorid-Klebebands gemäß Anspruch 2, wobei der UV-vernetzbare Heißschmelzhaftkleber weiter einen Wärmestabilisator, einen Photostabilisator, ein klebrigmachendes Harz und einen Weichmacher umfasst.

4. Verfahren zur Herstellung eines hochtemperaturbeständigen Polyvinylchlorid-Klebebands gemäß Anspruch 1, wobei der flüssige polymere Weichmacher mindestens einer ist, ausgewählt aus der Gruppe, bestehend aus flüssigem Polyethylenglycoladipat und flüssigem Polypropylenglycoladipat.

5. Verfahren zur Herstellung eines hochtemperaturbeständigen Polyvinylchlorid-Klebebands gemäß Anspruch 1, wobei der feste polymere Weichmacher mindestens einer ist, ausgewählt aus der Gruppe, bestehend aus einem Ethylen-Vinylacetat-Copolymer, einem Ethylen-Methylacrylat-Copolymer, einem Ethylen-Ethylacrylat-Copolymer, einem Ethylen-Butylacrylat-Copolymer, einem Nitrilbutadienkautschukpulver und chloriertem Polyethylen.

6. Verfahren zur Herstellung eines hochtemperaturbeständigen Polyvinylchlorid-Klebebands gemäß Anspruch 1, wobei der Wärmestabilisator mindestens einer ist, ausgewählt aus der Gruppe, bestehend aus einer Nicht-Blei-Flüssigkeit oder einem festen Barium/Zink-Stabilisator, einem Cadmium/Barium/Zink-Stabilisator, einem Calcium/Zink-Stabilisator oder einem Organozinnstabilisator.

7. Verfahren zur Herstellung eines hochtemperaturbeständigen Polyvinylchlorid-Klebebands gemäß Anspruch 2, wobei der polymerisierbare Photoinitiator ein Acetophenon- oder Benzophenon-Derivat, enthaltend eine Methacryloyloxygruppe oder eine Acryloyloxygruppe, ist.

8. Verfahren zur Herstellung eines hochtemperaturbeständigen Polyvinylchlorid-Klebebands gemäß Anspruch 1, wobei die Beschichtungsmenge bezüglich des UV-vernetzbaren Heißschmelzhaftklebers im Heißschmelzbeschichten 10-35 g/m² ist.

9. Verfahren zur Herstellung eines hochtemperaturbeständigen Polyvinylchlorid-Klebebands gemäß Anspruch 1, wobei die UV-Lampe eine Hochdruckquecksilberlampe, eine Medium-bis-Niederdruckquecksilberlampe oder eine LED-Lampe ist, mit einer UV-Bestrahlungsenergie von mindestens 10 mJ/cm².

10. Verfahren zur Herstellung eines hochtemperaturbeständigen Polyvinylchlorid-Klebebands gemäß Anspruch 1, wobei die Beschichtung mittels Schlitzdüsenbeschichten, Rakelbeschichten oder Extrusionslaminierung durchgeführt wird.

## Revendications

1. Procédé de fabrication d'une bande adhésive en chlorure de polyvinyle résistant aux hautes températures, comprenant:
l'enduction, sous forme de fusion à chaud, d'un adhésif thermofusible sensible à la pression réticulable aux UV sur un film de chlorure de polyvinyle résistant aux hautes températures à une température de 130-150°C, puis réticulation par irradiation d'UV à l'aide d'un ensemble de lampes UV, dans lequel le film de chlorure de polyvinyle résistant aux hautes températures comprend un plastifiant polymère liquide, un plastifiant polymère solide et un stabilisant thermique, et dans lequel le film de chlorure de polyvinyle résistant aux hautes températures est protégé par refroidissement pendant le processus d'enduction.

2. Procédé de fabrication d'une bande adhésive en chlorure de polyvinyle résistant aux hautes températures selon la revendication 1, dans lequel l'adhésif thermofusible sensible à la pression réticulable aux UV comprend un copolymère d'un ou de plusieurs photo-initiateurs polymérisables et un monomère d'acrylate, ou un mélange d'un oligomère contenant un ou plusieurs photo-initiateurs polymérisables et un polymère d'acrylate.

3. Procédé de fabrication d'une bande adhésive en chlorure de polyvinyle résistant aux hautes températures selon la revendication 2, dans lequel l'adhésif thermofusible sensible à la pression réticulable aux UV comprend en outre un stabilisant thermique, un stabilisant à la lumière, une résine tackifiante et un plastifiant.

4. Procédé de fabrication d'une bande adhésive en chlorure de polyvinyle résistant aux hautes températures selon la revendication 1, dans lequel le plastifiant polymère liquide est au moins l'un sélectionné parmi le groupe consistant en adipate de polyéthylèneglycol liquide et adipate de polypropylèneglycol liquide.

5. Procédé de fabrication d'une bande adhésive en chlorure de polyvinyle résistant aux hautes températures selon la revendication 1, dans lequel le plastifiant polymère solide est au moins l'un sélectionné parmi le groupe consistant en un copolymère d'éthylène-vinylacétate, un copolymère d'éthylène-méthylacrylate, un copolymère d'éthylène-éthylacrylate, un copolymère d'éthylène-butylacrylate, une poudre de caoutchouc de nitrile butadiène et du polyéthylène chloré.

6. Procédé de fabrication d'une bande adhésive en chlorure de polyvinyle résistant aux hautes températures selon la revendication 1, dans lequel le stabilisant thermique est au moins l'un sélectionné parmi le groupe consistant en un liquide sans plomb ou un stabilisant solide baryum/zinc, un stabilisant cadmium/baryum/zinc, un stabilisant calcium/zinc et un stabilisant organoétain.

7. Procédé de fabrication d'une bande adhésive en chlorure de polyvinyle résistant aux hautes températures selon la revendication 2, dans lequel le photo-initiateur polymérisable est un dérivé d'acétophénone ou de benzophénone contenant un groupement méthacryloyloxy ou un groupement acryloyloxy.

8. Procédé de fabrication d'une bande adhésive en chlorure de polyvinyle résistant aux hautes températures selon la revendication 1, dans lequel la quantité enduite d'adhésif thermofusible sensible à la pression réticulable aux UV en couchage par fusion à chaud est de 10-35 g/cm².

9. Procédé de fabrication d'une bande adhésive en chlorure de polyvinyle résistant aux hautes températures selon la revendication 1, dans lequel la lampe UV est une lampe à mercure haute pression, un lampe à mercure moyenne à basse pression ou une lampe à LED, avec une énergie d'irradiation d'UV d'au moins 10 mJ/cm².

10. Procédé de fabrication d'une bande adhésive en chlorure de polyvinyle résistant aux hautes températures selon la revendication 1, dans lequel l'enduction est réalisée au moyen d'une enduction par filière droite plate, d'enduction spiralée ou d'un laminage par extrusion.
